# EUROPEAN PATENT SPECIFICATION

(11) **EP 4 123 284 B1**
(45) Date of publication and mention of the grant of the patent: **06.11.2024**
(21) Application number: 20934160.1
(22) Date of filing: 27.04.2020
(51) Int. Cl.: G01M 13/00

(54) **FAULT DIAGNOSIS METHOD AND APPARATUS THEREFOR**
FEHLERDIAGNOSEVERFAHREN UND VORRICHTUNG DAFÜR
PROCÉDÉ DE DIAGNOSTIC DE DÉFAILLANCE ET APPAREIL ASSOCIÉ

(43) Date of publication of application: 25.01.2023
(73) Proprietor: Siemens Aktiengesellschaft, 80333 München (DE)
(72) Inventor: WANG, Hongwei, Beijing 100052 (CN); JIE, Ming, Beijing 100102 (CN); FAN, Shunjie, Beijing 100102 (CN)
(74) Representative: Isarpatent
(86) International application number: PCT/CN2020/087312
(87) International publication number: WO 2021/217364

(56) References cited:
- CN-A- 106 226 074
- CN-A- 108 106 830
- CN-A- 109 556 895
- CN-A- 110 487 549
- CN-A- 110 954 312
- US-A1- 2011 307 093
- GUO SHENG ET AL: "A Novel Fault Diagnosis Method for Rotating Machinery Based on a Convolutional Neural Network", SENSORS, vol. 18, no. 5, 1 January 2018 (2018-01-01), CH, pages 1 - 16, XP093091041, ISSN: 1424-8220, DOI: 10.3390/s18051429
- ALGUINDIGUE I E ET AL: "MONITORING AND DIAGNOSIS OF ROLLING ELEMENT BEARINGS USING ARTIFICIAL NEURAL NETWORKS", IEEE TRANSACTIONS ON INDUSTRIAL ELECTRONICS, IEEE SERVICE CENTER, PISCATAWAY, NJ, USA, vol. 40, no. 2, 1 April 1993 (1993-04-01), pages 209 - 216, XP000387380, ISSN: 0278-0046, DOI: 10.1109/41.222642

## Description

### Technical Field

The present invention mainly relates to the field of computer technologies, and in particular, to a fault diagnosis method and an apparatus therefor.

### Background Art

CN 110 954 312 A describes a reciprocating mechanical fault diagnosis method based on keyless phase whole-cycle signals which can be used for diagnosing abnormal faults of a reciprocating mechanical valve clearance under the condition that a key phase and a rotating speed sensor cannot be installed.

The document GUO SHENG ET AL, "A Novel Fault Diagnosis Method for Rotating Machinery Based on a Convolutional Neural Network", SENSORS, CH, vol. 18, no. 5, doi:10.3390/s18051429, ISSN 1424-8220, pages 1 - 16 proposes a method for fault diagnosis of a rotating machine using a Convolutional Neural Network (CNN). For this purpose, continuous wavelet transform scalogram (CWTS) are formed by discomposing vibration signals of rotating machinery in different scales using wavelet transform. Then the CNN is trained to diagnose faults, with CWTS as the input.

The document ALGUINDIGUE I E ET AL, "MONITORING AND DIAGNOSIS OF ROLLING ELEMENT BEARINGS USING ARTIFICIAL NEURAL NETWORKS", IEEE TRANSACTIONS ON INDUSTRIAL ELECTRONICS, IEEE SERVICE CENTER, PISCATAWAY, NJ, USA, vol. 40, no. 2, doi:10.1109/41.222642, ISSN 0278-0046, pages 209 - 216 describes an approach for monitoring and diagnosis of rolling element bearings using artificial neural networks. For this purpose data are acquired by accelerometers and transformed into low- and high frequency spectra by a FFT before feeding the spectra to the neural network.

In industrial systems, the performance of mechanical apparatuses such as rotating motors plays a very important role. Monitoring the status of and performing fault diagnosis on these mechanical apparatuses in a timely manner may predict an abnormal state of the mechanical apparatuses in a timely manner before the apparatuses are actually faulty, thereby ensuring that these mechanical apparatuses operate with good performance.

During fault diagnosis on a mechanical apparatus, various types of signals are collected from the mechanical apparatus, among which more commonly used signals are vibration signals in different positions and directions. When a vibration signal is used for fault diagnosis, the vibration signal is first collected, and then a series of analyses are performed on the vibration signal, for example, the vibration signal may be analyzed according to the international standards ISO 13373-1, ISO 13373-2, and ISO 13373-3, to determine whether there is a fault and a type of the fault.

Technical personnel needs to have related domain knowledge to perform spectrum analysis on the vibration signal, which limits the application of fault diagnosis based on vibration signals . With the rapid development of the artificial intelligence technology, this technology was attempted to be used for fault diagnosis. However, in an existing neural network model, acceleration hardware (such as a network processing unit (NPU)) and a platform (such as TensorFlow and Caffe) thereof are mainly oriented to use for image, text, and voice data, and are not applicable to vibration signals required for fault diagnosis. In addition, different types of vibration sensors have different sampling rates and resolutions, and in this case, a single neural network model is not applicable. To obtain a more accurate diagnosis result, the neural network model needs to be trained separately using vibration data with different sampling rates and resolutions, which will increase training complexity and training time.

### Summary of the Invention

To solve the above technical problems, the present invention provides a fault diagnosis method and an apparatus therefor, so as to transform a fault diagnosis problem into an image recognition problem, which is applicable to an image-oriented neural network model and improves fault diagnosis efficiency and accuracy.

To achieve the above objectives, the present invention proposes a fault diagnosis method for a rotating motor, the fault diagnosis method including: obtaining a time-domain acceleration signal of the rotating motor along a vibration direction and a rotation period of the rotating motor; converting the time-domain acceleration signal into a time-domain velocity signal, cutting off a plurality of velocity signal segments along the time-domain velocity signal by taking the rotation period as a step size, and arranging the plurality of velocity signal segments in sequence to obtain a velocity signal matrix; converting the velocity signal matrix into a single image; and inputting the single image into a trained neural network model to obtain a fault diagnosis result.

For this purpose, the velocity signal matrix is converted into the image, and the image is input into the trained neural network model, so that the fault diagnosis result is obtained, thereby transforming a fault diagnosis problem into an image recognition problem, which is applicable to an image-oriented neural network model and improves fault diagnosis efficiency and accuracy.

In an embodiment of the present invention, the converting the time-domain acceleration signal into a time-domain velocity signal includes: converting the time-domain acceleration signal into a frequency-domain acceleration signal through fast Fourier transform; performing frequency-domain integration on the frequency-domain acceleration signal to obtain a frequency-domain velocity signal; and converting the frequency-domain velocity signal into the time-domain velocity signal through inverse fast Fourier transform.

For this purpose, frequency-domain integration is used to remove high-frequency noise in a vibration signal.

In an embodiment of the present invention, the cutting off a plurality of velocity signal segments along the time-domain velocity signal by taking the rotation period as a step size includes: cutting off the plurality of velocity signal segments along the time-domain velocity signal in a non-overlapping manner by taking the rotation period as the step size.

For this purpose, the plurality of velocity signal segments are cut off along the time-domain velocity signal in a non-overlapping manner by taking the rotation period as the step size, and adjacent velocity signal segments from the plurality of velocity signal segments do not overlap, thereby improving data stability and fault diagnosis accuracy.

In an embodiment of the present invention, the converting the velocity signal matrix into an image includes: multiplying the velocity signal matrix by a normalization coefficient to obtain a normalized velocity signal matrix; and mapping the normalized velocity signal matrix to the image.

For this purpose, the velocity signal matrix is normalized, such that vibration data with different sampling rates and resolutions are all applicable, thereby reducing complexity of the neural network model and improving fault diagnosis efficiency.

In an embodiment of the present invention, the converting the velocity signal matrix into an image includes: converting the velocity signal matrix into a color image.

For this purpose, the velocity signal matrix is converted into the color image, which can increase an image recognition degree and facilitate labeling by technical personnel during training of the neural network model, thereby improving the accuracy of the neural network model for fault diagnosis.

In an embodiment of the present invention, after the converting the velocity signal matrix into an image, the method further includes: adjusting a size of the image to a predetermined size for the neural network model.

For this purpose, the size of the image is adjusted to the predetermined size for the neural network model, which can reduce the complexity of the neural network model and improve the fault diagnosis efficiency.

The present invention further proposes a fault diagnosis apparatus for a rotating motor, the fault diagnosis apparatus including: an obtaining unit obtaining a time-domain acceleration signal of the rotating motor along a vibration direction and a rotation period of the rotating motor; an alignment and arrangement unit converting the time-domain acceleration signal into a time-domain velocity signal, cutting off a plurality of velocity signal segments along the time-domain velocity signal by taking the rotation period as a step size, and arranging the plurality of velocity signal segments in sequence to obtain a velocity signal matrix; a conversion unit converting the velocity signal matrix into a single image; and a determining unit inputting the single image into a trained neural network

model to obtain a fault diagnosis result.

In an embodiment of the present invention, the converting, by the obtaining unit, the time-domain acceleration signal into a time-domain velocity signal includes: converting the time-domain acceleration signal into a frequency-domain acceleration signal through fast Fourier transform; performing frequency-domain integration on the frequency-domain acceleration signal to obtain a frequency-domain velocity signal; and converting the frequency-domain velocity signal into the time-domain velocity signal through inverse fast Fourier transform.

In an embodiment of the present invention, the cutting off, by the alignment and arrangement unit, a plurality of velocity signal segments along the time-domain velocity signal by taking the rotation period as a step size includes: cutting off the plurality of velocity signal segments along the time-domain velocity signal in a non-overlapping manner by taking the rotation period as the step size.

In an embodiment of the present invention, the converting, by the conversion unit, the velocity signal matrix into an image includes: multiplying the velocity signal matrix by a normalization coefficient to obtain a normalized velocity signal matrix; and mapping the normalized velocity signal matrix to the image.

In an embodiment of the present invention, the converting, by the conversion unit, the velocity signal matrix into an image includes: converting the velocity signal matrix into a color image.

In an embodiment of the present invention, after the converting, by the conversion unit, the velocity signal matrix into an image, the following step is further included: adjusting a size of the image to a predetermined size for the neural network model.

The present invention further proposes an electronic device, including a processor, a memory, and instructions stored in the memory, where when the instructions are executed by the processor, the method as described above is implemented.

The present invention further proposes a computer-readable storage medium having computer instructions stored thereon, where when the computer instructions are run, the method as described above is performed.

### Brief Description of the Drawings

The following accompanying drawings are only intended to illustratively describe and explain the present invention and not intended to limit the scope of the present invention. In the accompanying drawings,
FIG. 1 is a schematic diagram of a fault diagnosis model in the prior art;
FIG. 2 is a flowchart of a fault diagnosis method according to an embodiment of the present invention;
FIG. 3 is a schematic diagram of a process of a fault diagnosis method according to an embodiment of the present invention; and
FIG. 4 is a block diagram of a fault diagnosis apparatus according to an embodiment of the present invention.

### Description of reference numerals:

- 100: Fault diagnosis model
- 110: Data collection unit
- 120: Preprocessing unit
- 130: Feature extraction unit
- 140: Diagnosis unit
- 141: Diagnosis algorithm
- 150: Training set input unit
- 200: Fault diagnosis method
- 210-240: Steps
- 301: Time-domain acceleration signal
- 302: Time-domain velocity signal
- 302a-302d: Velocity signal segments
- 303: Velocity signal matrix
- 303a: Local magnified part of the velocity signal matrix
- 304: Normalized velocity signal matrix
- 304a: Local magnified part of the normalized velocity signal matrix
- 305: Image
- 306: Image with an adjusted size
- 400: Fault diagnosis apparatus
- 410: Obtaining unit
- 420: Alignment and arrangement unit
- 430: Conversion unit
- 440: Determining unit

### Detailed Description of Embodiments

For the sake of better understanding of the technical features, objects, and effects of the present invention, the particular embodiments of the present invention will now be described with reference to the accompanying drawings.

In the following description, many specific details are set forth in order to fully understand the present invention, but the present invention can also be implemented in other ways different from those described herein. Therefore, the present invention is not limited by the specific embodiments disclosed below.

As shown in the present application and the claims, unless the context expressly indicates otherwise, the words "a", "an", "said", and/or "the" do not specifically refer to the singular, but may also include the plural. Generally, the terms "include" and "comprise" only suggest that the expressly identified steps and elements are included, but these steps and elements do not constitute an exclusive list, and the method or device may further include other steps or elements.

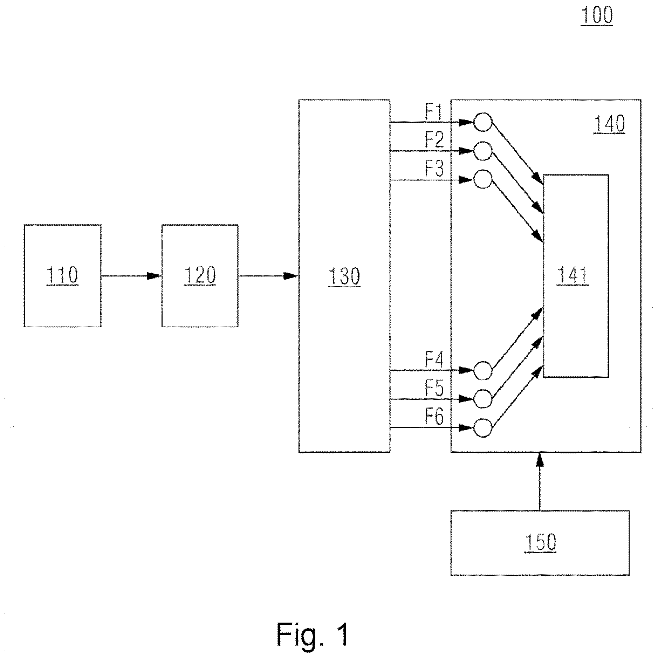

FIG. 1 is a schematic diagram of a fault diagnosis model 100 in the prior art. As shown in FIG. 1, the fault diagnosis model 100 includes a data collection unit 110, a preprocessing unit 120, a feature extraction unit 130, a diagnosis unit 140, and a training set input unit 150.

When the fault diagnosis model 100 performs fault diagnosis, the data collection unit 110 (for example, an acceleration sensor) collects a vibration signal of a rotating motor along a vibration direction, and the preprocessing unit 120 preprocesses the vibration signal for analysis and processing by subsequent modules. For example, the preprocessing unit performs fast Fourier transform (FFT) on the vibration signal to convert the time-domain vibration signal into a frequency-domain vibration signal; the feature extraction unit 130 performs spectrum analysis on the frequency-domain vibration signal to extract feature frequency; the diagnosis unit 140 uses a diagnosis algorithm 141 to perform diagnosis on the input feature frequency, and outputs a diagnosis result; and the training set input unit 150 inputs a training set into the diagnosis unit 140 to train the diagnosis unit 140.

For the fault diagnosis model 100, different types of data collection units 110 have different sampling rates and resolutions, and in this case, a single neural network model is not applicable. To obtain a more accurate diagnosis result, the neural network model needs to be trained separately using vibration data with different sampling rates and resolutions, which will increase training complexity and training time.

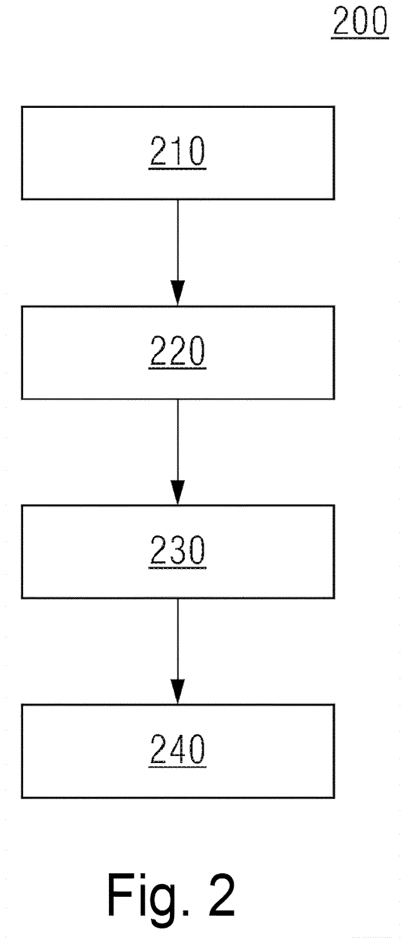

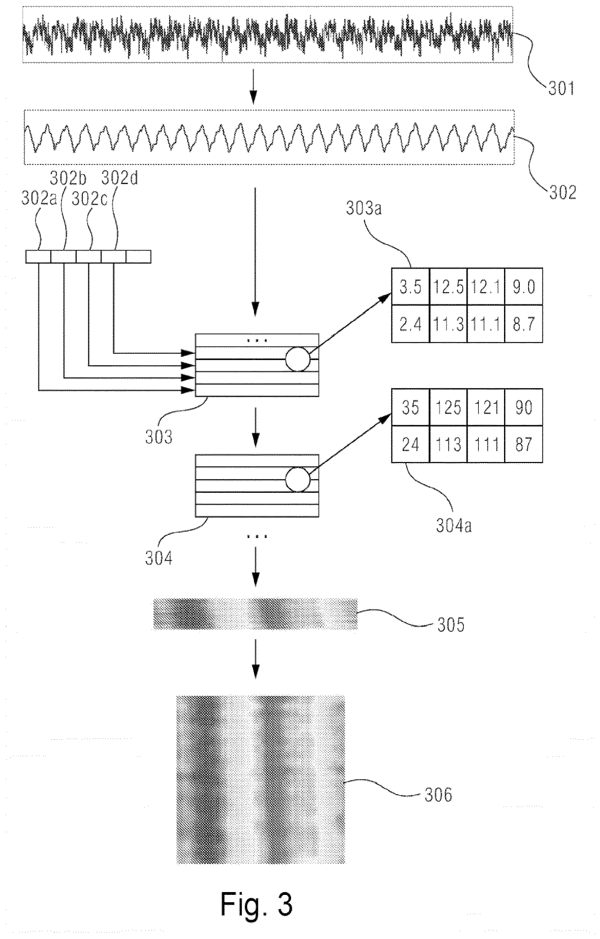

FIG. 2 is a flowchart of a fault diagnosis method according to an embodiment of the present invention. FIG. 3 is a schematic diagram of a process of a fault diagnosis method according to an embodiment of the present invention. The fault diagnosis method in this embodiment is described below with reference to FIG. 2 and FIG. 3.

In step 210, a time-domain acceleration signal of a rotating motor along a vibration direction and a rotation period of the rotating motor are obtained.

The rotating motor has two forms of motion: rotation and vibration. The rotating motor rotates about the rotating shaft to output torque. A vibration signal of the rotating motor along a vibration direction indicates that there is a sign of fault in the rotating motor. Through analysis on the vibration signal of the rotating motor along the vibration direction, whether a fault occurs in the rotating motor and a type of the fault can be determined.

The vibration direction may be either an axial direction or a radial direction. A plurality of vibration sensors may be arranged in the axial direction and/or the radial direction of the rotating motor, to obtain a vibration signal of the rotating motor along the vibration direction. In an embodiment of the present invention, the vibration signal may be a time-domain acceleration signal, and the time-domain acceleration signal may be collected by an acceleration sensor, such as a micro-electro-mechanical systems (MEMS) accelerometer.

The time-domain acceleration signal of the rotating motor along the vibration direction is obtained through collection by the acceleration sensor. FIG. 3 shows a time-domain acceleration signal 301 collected by an accelerometer, where the abscissa represents time in the unit of millisecond (ms), the ordinate represents an acceleration value in the unit of m/s², and the time-domain acceleration signal 301 shows acceleration values at different time points. It is worth noting that different accelerometers may have different sampling rates, that is, sampling is performed at intervals of different time points, and different accelerometers may also have different resolutions, that is, collected acceleration values have different decimal places.

The rotation period of the rotating motor can be calculated based on the rotational speed of the rotating motor. Specifically, an encoder collects the rotational speed of the rotating motor, and the rotation period of the rotating motor, that is, the time taken for the rotating motor to rotate by one turn, can be calculated based on the rotational speed. For example, the rotational speed of the rotating motor collected by the encoder is 1800 r/min, that is, 30 revolutions per second, the time for each turn is 1/30 second, and the rotation period is 1/30 second.

In step 220, the time-domain acceleration signal is converted into a time-domain velocity signal, a plurality of velocity signal segments are cut off along the time-domain velocity signal by taking the rotation period as a step size, and the plurality of velocity signal segments are arranged in sequence to obtain a velocity signal matrix.

Converting the time-domain acceleration signal into the time-domain velocity signal may be performing time-domain integration on the time-domain acceleration signal, or performing frequency-domain integration after converting the time-domain acceleration signal into the frequency domain.

When time-domain integration is performed, time-domain integration is directly performed on the time-domain acceleration signal to obtain the time-domain velocity signal. When frequency-domain integration is performed, the time-domain acceleration signal is converted into a frequency-domain acceleration signal through fast Fourier transform (FFT) ; frequency-domain integration is performed on the frequency-domain acceleration signal to obtain a frequency-domain velocity signal; and the frequency-domain velocity signal is converted into the time-domain velocity signal through inverse fast Fourier transform (IFFT). For this purpose, frequency-domain integration is used to remove high-frequency noise in a vibration signal.

FIG. 3 shows a time-domain velocity signal 302 obtained after conversion of the time-domain acceleration signal 301, where the abscissa represents time in the unit of second (s), the ordinate represents a velocity value in the unit of m/s, and the time-domain velocity signal 302 shows velocity values at different time points.

After the time-domain velocity signal is obtained, the plurality of velocity signal segments are cut off along the time-domain velocity signal by taking the rotation period as the step size. The plurality of velocity signal segments may be cut off along the time-domain velocity signal from the initial moment by taking the rotation period as the step size. If there is relatively large noise in the initial parts of the time-domain velocity signal, these signal segments with relatively large noise can be skipped to ensure data reliability and to improve the fault diagnosis accuracy.

In an optional case, the plurality of velocity signal segments are cut off along the time-domain velocity signal in a non-overlapping manner by taking the rotation period as the step size. After the starting point of the initial signal segment is determined, the initial signal segment with a length being the rotation period is obtained along the time-domain velocity signal, a second signal segment with a length being the rotation period is obtained along the time-domain velocity signal by taking data next to a data point at the end of the initial signal segment as the starting point, and so on, the plurality of velocity signal segments may be cut off, and the velocity signal segments cut off have the same number of pieces of velocity data. Adjacent velocity signal segments from the plurality of velocity signal segments do not overlap, thereby improving data stability and fault diagnosis accuracy.

After the plurality of velocity signal segments are obtained, since the velocity signal segments have the same number of pieces of velocity data, the velocity signal segments are arranged in sequence, so that the velocity signal matrix can be obtained. The velocity signal segments may be arranged row by row in sequence from top to bottom or from bottom to top to obtain the velocity signal matrix. Alternatively, the velocity signal segments may be arranged column by column in sequence from left to right or from right to left to obtain the velocity signal matrix.

As shown in FIG. 3, starting from the initial moment, at least four velocity signal segments 302a, 302b, 302c, and 302d are cut off along the time-domain velocity signal 302 in a non-overlapping manner at the rotation period (for example, 1/30 second in the example described above), adjacent velocity signal segments do not overlap, the velocity signal segments 302a, 302b, 302c, and 302d have the same number of pieces of velocity data, and the velocity signal segments 302a, 302b, 302c, and 302d are arranged row by row in sequence from bottom to top to obtain the velocity signal matrix 303. As can be seen from the local magnified part 303a of the velocity signal matrix 303, the velocity signal segment 302c includes velocity data 3.5, 12.5, 12.1, and 9.0, and the velocity signal segment 302d includes velocity data 2.4, 11.3, 11.1, and 8.7.

In step 230, the velocity signal matrix is converted into an image.

In this step, the velocity signal matrix is converted into the image, to transform a fault diagnosis problem into an image recognition problem, which can be applicable to an image-oriented neural network model and improves fault diagnosis efficiency and accuracy.

In an optional case, the converting the velocity signal matrix into an image includes: multiplying the velocity signal matrix by a normalization coefficient to obtain a normalized velocity signal matrix; and mapping the normalized velocity signal matrix to the image. The velocity signal matrix is normalized, such that vibration data with different sampling rates and resolutions are all applicable, thereby reducing complexity of the neural network model and improving the fault diagnosis efficiency.

Optionally, the velocity signal matrix may be converted into a color image. The color image may be a red-green-blue (RGB) color image, a cyan-magenta-yellow-key (CMYK) color image, or the like. The velocity signal matrix is converted into the color image, which can increase an image recognition degree and facilitate labeling by technical personnel during training of the neural network model, thereby improving the accuracy of the neural network model for fault diagnosis.

The RGB color image is used as an example, the velocity signal matrix is multiplied by the normalization coefficient, such that a maximum value of values of velocity data in the velocity signal matrix is approximately 255, and then pseudo color rules such as those in MATLAB are used to map the velocity signal matrix to the RGB color image. FIG. 3 shows a velocity signal matrix 304 normalized with a normalization coefficient of 10. As can be seen from the local magnified part 304a of the normalized velocity signal matrix 304, the velocity data of the velocity signal segment 302c is normalized to 35, 125, 121, and 90, and the velocity data of the velocity signal segment 302d is normalized to 24, 113, 111, and 87. The RGB image 305 can be obtained by converting the normalized velocity signal matrix 304 using the pseudo color rules.

In some embodiments, after the velocity signal matrix is converted into the image, a size of the image is adjusted to a predetermined size for the neural network model, for example, 320 mm x 320 mm. The size of the image is adjusted to the predetermined size for the neural network model, which can reduce the complexity of the neural network model and improve the fault diagnosis efficiency. In FIG. 3, the RGB image 305 is resized to an image 306, and a size of the image 306 is 320 mm x 320 mm.

In step 240, the image is input into a trained neural network model to obtain a fault diagnosis result.

The neural network model may be an AlexNet or GoogleNet neural network model. In the embodiment of the present invention, the neural network model may be trained by using an image data set. Training the neural network model may include: (1) labeling a type of a fault to be recognized, and converting the fault into a file in a format required for training; (2) dividing the converted image file into a training set and a test set, using the training set to train the neural network model, and using the test set to test the trained neural network model.

After testing, the trained neural network model can be obtained, and the image output in step 230 can be analyzed and processed using the trained neural network model, to obtain the fault diagnosis result. For example, faults such as unbalance, looseness, and eccentricity can be diagnosed based on the input image, and if the labeled fault type is not recognized, it is determined that no fault has occurred in the rotating motor. For example, the image 306 shown in FIG. 3 is a typical unbalanced image, the image 306 is input into the neural network model, and the fault diagnosis result obtained is that an unbalanced fault occurs.

According to the fault diagnosis method for a rotating motor provided in the embodiment of the present invention, the velocity signal matrix is converted into the image, and the image is input into the trained neural network model, so that the fault diagnosis result is obtained, thereby transforming a fault diagnosis problem into an image recognition problem, which is applicable to an image-oriented neural network model and improves fault diagnosis efficiency and accuracy.

A flowchart is used herein to illustrate the operations performed in the method according to the embodiments of the present application. It should be understood that the operations described above are not necessarily performed exactly in order. Instead, the various steps may be processed in reverse order or simultaneously. In addition, other operations are added to these processes, or a certain step or several operations are removed from these processes.

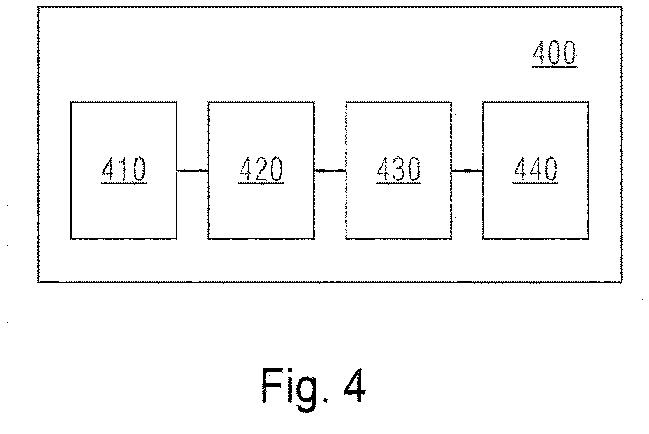

FIG. 4 is a block diagram of a fault diagnosis apparatus 400 according to an embodiment of the present invention. As shown in FIG. 4, the fault diagnosis apparatus 400 in the embodiment includes:
an obtaining unit 410 obtaining a time-domain acceleration signal of the rotating motor along a vibration direction and a rotation period of the rotating motor; an alignment and arrangement unit 420 converting the time-domain acceleration signal into a time-domain velocity signal, cutting off a plurality of velocity signal segments along the time-domain velocity signal by taking the rotation period as a step size, and arranging the plurality of velocity signal segments in sequence to obtain a velocity signal matrix; a conversion unit 430 converting the velocity signal matrix into an image; and a determining unit 440 inputting the image into a trained neural network model to obtain a fault diagnosis result.

In an optional case, the converting, by the obtaining unit 410, the time-domain acceleration signal into a time-domain velocity signal includes: converting the time-domain acceleration signal into a frequency-domain acceleration signal through fast Fourier transform; performing frequency-domain integration on the frequency-domain acceleration signal to obtain a frequency-domain velocity signal; and converting the frequency-domain velocity signal into the time-domain velocity signal through inverse fast Fourier transform.

In an optional case, the cutting off, by the alignment and arrangement unit 420, a plurality of velocity signal segments along the time-domain velocity signal by taking the rotation period as a step size includes: cutting off the plurality of velocity signal segments along the time-domain velocity signal in a non-overlapping manner by taking the rotation period as the step size.

In an optional case, the converting, by the conversion unit 430, the velocity signal matrix into an image includes: multiplying the velocity signal matrix by a normalization coefficient to obtain a normalized velocity signal matrix; and mapping the normalized velocity signal matrix to the image.

In an optional case, the converting, by the conversion unit 430, the velocity signal matrix into an image includes: converting the velocity signal matrix into a color image.

In an optional case, after the converting, by the conversion unit 430, the velocity signal matrix into an image, the following step is further included: adjusting a size of the image to a predetermined size for the neural network model.

For implementations and specific processes of the fault diagnosis apparatus 400, reference may be made to the fault diagnosis method 300, which is not repeated herein.

The present invention further proposes an electronic device, including a processor, a memory, and instructions stored in the memory, where when the instructions are executed by the processor, the method as described above is implemented.

The present invention further proposes a computer-readable storage medium having computer instructions stored thereon, where when the computer instructions are run, the above method is performed.

Some aspects of the method and apparatus of the present invention may be completely executed by hardware, or may be completely executed by software (including firmware, resident software, microcode, etc.), or may be executed by a combination of hardware and software. The hardware or software described above may all be referred to as "data block", "module", "engine", "unit", "component", or "system". The processor may be one or more application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or a combination thereof. In addition, various aspects of the present invention may be embodied as a computer product in one or more computer-readable media, and the product includes computer-readable program code. For example, the computer-readable media may include, but are not limited to, a magnetic storage device (for example, a hard disk, a floppy disk, a tape...), an optical disc (for example, a compact disc (CD), a digital versatile disc (DVD) ... , a smart card, and a flash memory device (for example, a card, a stick, a key drive...).

The computer-readable medium may include a propagation data signal including computer program code, for example, on a baseband or as a part of a carrier. The propagation signal may be represented in a plurality of forms, including an electromagnetic form, an optical form, or the like, or a proper combination form. The computer-readable medium may be any computer-readable medium other than a computer-readable storage medium, and the medium may be connected to an instruction executing system, apparatus, or device, to implement the communication, propagation, or transmission of a program for use. The program code on the computer-readable medium may be propagated over any suitable medium, including radio, a cable, a fiber optic cable, a radio frequency (RF) signal, a similar medium, or any combination of the above media.

It should be understood that, although the description is given according to each of the embodiments, but each embodiment does not only comprise an independent technical solution, this narration manner of the description is only for clarity, and for a person skilled in the art, the description shall be regarded as a whole, and the technical solution in each of the embodiments can also be properly combined to form other implementations that can be understood by a person skilled in the art.

## Claims

1. A fault diagnosis method (200) for a rotating motor, the fault diagnosis method (200) comprising:
obtaining a time-domain acceleration signal of the rotating motor along a vibration direction and a rotation period (210) of the rotating motor;
converting the time-domain acceleration signal into a time-domain velocity signal,
cutting off a plurality of velocity signal segments along the time-domain velocity signal by taking the rotation period as a step size, and arranging the plurality of velocity signal segments in sequence to obtain a velocity signal matrix (220);
converting the velocity signal matrix into a single image (230); and
inputting the single image into a trained neural network model to obtain a fault diagnosis result (240).

2. The fault diagnosis method according to claim 1, **characterized in that** the converting the time-domain acceleration signal into a time-domain velocity signal comprises:
converting the time-domain acceleration signal into a frequency-domain acceleration signal through fast Fourier transform;
performing frequency-domain integration on the frequency-domain acceleration signal to obtain a frequency-domain velocity signal; and converting the frequency-domain velocity signal into the time-domain velocity signal through inverse fast Fourier transform.

3. The fault diagnosis method according to claim 1, **characterized in that** the cutting off a plurality of velocity signal segments along the time-domain velocity signal by taking the rotation period as a step size comprises: cutting off the plurality of velocity signal segments along the time-domain velocity signal in a non-overlapping manner by taking the rotation period as the step size.

4. The fault diagnosis method according to any one of claims 1 to 3, **characterized in that** the converting the velocity signal matrix into an image comprises:
multiplying the velocity signal matrix by a normalization coefficient to obtain a normalized velocity signal matrix; and mapping the normalized velocity signal matrix to the image.

5. The fault diagnosis method according to claim 4, **characterized in that** the converting the velocity signal matrix into an image (230) comprises: converting the velocity signal matrix into a color image.

6. The fault diagnosis method according to claim 1, **characterized in that** after the converting the velocity signal matrix into an image (230), the method further comprises: adjusting a size of the image to a predetermined size for the neural network model.

7. A fault diagnosis apparatus (400) for a rotating motor, the fault diagnosis apparatus (400) comprising:
an obtaining unit (410) configured to obtain a time-domain acceleration signal of the rotating motor along a vibration direction and a rotation period of the rotating motor;
an alignment and arrangement unit (420) configured to convert the time-domain acceleration signal into a time-domain velocity signal, to cut off a plurality of velocity signal segments along the time-domain velocity signal by taking the rotation period as a step size, and
to arrange the plurality of velocity signal segments in sequence to obtain a velocity signal matrix;
a conversion unit (430) configured to convert the velocity signal matrix into a single image; and
a determining unit (440) configured to input the single image into a trained neural network model to obtain a fault diagnosis result.

8. The fault diagnosis apparatus according to claim 7, **characterized in that** the converting, by the obtaining unit (410), the time-domain acceleration signal into a time-domain velocity signal comprises:
converting the time-domain acceleration signal into a frequency-domain acceleration signal through fast Fourier transform;
performing frequency-domain integration on the frequency-domain acceleration signal to obtain a frequency-domain velocity signal; and
converting the frequency-domain velocity signal into the time-domain velocity signal through inverse fast Fourier transform.

9. The fault diagnosis apparatus according to claim 7, **characterized in that** the cutting off, by the alignment and arrangement unit (420), a plurality of velocity signal segments along the time-domain velocity signal by taking the rotation period as a step size comprises: cutting off the plurality of velocity signal segments along the time-domain velocity signal in a non-overlapping manner by taking the rotation period as the step size.

10. The fault diagnosis apparatus according to any one of claims 7 to 9, **characterized in that** the converting, by the conversion unit (430), the velocity signal matrix into an image comprises: multiplying the velocity signal matrix by a normalization coefficient to obtain a normalized velocity signal matrix; and mapping the normalized velocity signal matrix to the image.

11. The fault diagnosis apparatus according to claim 10, **characterized in that** the converting, by the conversion unit (430), the velocity signal matrix into an image comprises: converting the velocity signal matrix into a color image.

12. The fault diagnosis apparatus according to claim 7, **characterized in that** after the converting, by the conversion unit (430), the velocity signal matrix into an image, the following step is further comprised: adjusting a size of the image to a predetermined size for the neural network model.

13. An electronic device, comprising a processor, a memory, and instructions stored in the memory, wherein when the instructions are executed by the processor, the method according to any one of claims 1 to 6 is implemented.

14. A computer-readable storage medium having computer instructions stored thereon, wherein when the computer instructions are run, the method according to any one of claims 1 to 6 is performed.

## Patentansprüche

1. Fehlerdiagnoseverfahren (200) für einen Rotationsmotor, wobei das Fehlerdiagnoseverfahren (200) Folgendes umfasst:
Erhalten eines Zeitbereichsbeschleunigungssignals des Rotationsmotors entlang einer Vibrationsrichtung und einer Rotationsperiode (210) des Rotationsmotors;
Umwandeln des Zeitbereichsbeschleunigungssignals in ein Zeitbereichsgeschwindigkeitssignal,
Abschneiden einer Vielzahl von Geschwindigkeitssignalsegmenten entlang des Zeitbereichsgeschwindigkeitssignals, indem die Rotationsperiode als eine Schrittgröße genommen wird, und Anordnen der Vielzahl von Geschwindigkeitssignalsegmenten in Folge, um eine Geschwindigkeitssignalmatrix (220) zu erhalten; Umwandeln der Geschwindigkeitssignalmatrix in ein Einzelbild (230); und
Eingeben des Einzelbilds in ein trainiertes neuronales Netzwerkmodell, um ein Fehlerdiagnoseergebnis zu erhalten (240).

2. Fehlerdiagnoseverfahren nach Anspruch 1, **dadurch gekennzeichnet, dass** die Umwandlung des Zeitbereichsbeschleunigungssignals in ein Zeitbereichsgeschwindigkeitssignal Folgendes umfasst:
Umwandeln des Zeitbereichsbeschleunigungssignals in ein Frequenzbereichsbeschleunigungssignal durch schnelle Fourier-Transformation;
Durchführen einer Frequenzbereichsintegration an dem Frequenzbereichsbeschleunigungssignal, um ein Frequenzbereichsgeschwindigkeitssignal zu erhalten; und
Umwandeln des Frequenzbereichsgeschwindigkeitssignals in das Zeitbereichsgeschwindigkeitssignal durch inverse schnelle Fourier-Transformation.

3. Fehlerdiagnoseverfahren nach Anspruch 1, **dadurch gekennzeichnet, dass** das Abschneiden einer Vielzahl von Geschwindigkeitssignalsegmenten entlang des Zeitbereichsgeschwindigkeitssignals unter Verwendung der Rotationsperiode als Schrittgröße Folgendes umfasst: Abschneiden der Vielzahl von Geschwindigkeitssignalsegmenten entlang des Zeitbereichsgeschwindigkeitssignals in einer nicht überlappenden Weise unter Verwendung der Rotationsperiode als Schrittgröße.

4. Fehlerdiagnoseverfahren nach einem der Ansprüche 1 bis 3, **dadurch gekennzeichnet, dass** das Umwandeln der Geschwindigkeitssignalmatrix in ein Bild Folgendes umfasst:
Multiplizieren der Geschwindigkeitssignalmatrix mit einem Normalisierungskoeffizienten, um eine normalisierte Geschwindigkeitssignalmatrix zu erhalten; und
Abbilden der normalisierten Geschwindigkeitssignalmatrix auf das Bild.

5. Fehlerdiagnoseverfahren nach Anspruch 4, **dadurch gekennzeichnet, dass** das Umwandeln der Geschwindigkeitssignalmatrix in ein Bild (230) Folgendes umfasst: Umwandeln der Geschwindigkeitssignalmatrix in ein Farbbild.

6. Fehlerdiagnoseverfahren nach Anspruch 1, **dadurch gekennzeichnet, dass** das Verfahren nach dem Umwandeln der Geschwindigkeitssignalmatrix in ein Bild (230) ferner Folgendes umfasst: Einstellen einer Größe des Bilds auf eine vorbestimmte Größe für das neuronale Netzwerkmodell.

7. Fehlerdiagnosevorrichtung (400) für einen Rotationsmotor, wobei die Fehlerdiagnosevorrichtung (400) Folgendes umfasst:
eine Beschaffungseinheit (410), die dafür ausgebildet ist, ein Zeitbereichsbeschleunigungssignal des Rotationsmotors entlang einer Vibrationsrichtung und einer Rotationsperiode des Rotationsmotors zu erhalten;
eine Ausrichtungs- und Anordnungseinheit (420), die dafür ausgebildet ist, das Zeitbereichsbeschleunigungssignal in ein Zeitbereichsgeschwindigkeitssignal umzuwandeln, eine Vielzahl von Geschwindigkeitssignalsegmenten entlang des Zeitbereichsgeschwindigkeitssignals abzuschneiden, indem die Rotationsperiode als eine Schrittgröße genommen wird, und die Vielzahl von Geschwindigkeitssignalsegmenten in Folge anzuordnen, um eine Geschwindigkeitssignalmatrix zu erhalten;
eine Umwandlungseinheit (430), die dafür ausgebildet ist, die Geschwindigkeitssignalmatrix in ein Einzelbild umzuwandeln; und
eine Bestimmungseinheit (440), die dafür ausgebildet ist, das Einzelbild in ein trainiertes neuronales Netzwerkmodell einzugeben, um ein Fehlerdiagnoseergebnis zu erhalten.

8. Fehlerdiagnosevorrichtung nach Anspruch 7, **dadurch gekennzeichnet, dass** das Umwandeln, durch die Beschaffungseinheit (410), des Zeitbereichsbeschleunigungssignals in ein Zeitbereichsgeschwindigkeitssignal Folgendes umfasst:
Umwandeln des Zeitbereichsbeschleunigungssignals in ein Frequenzbereichsbeschleunigungssignal durch schnelle Fourier-Transformation;
Durchführen einer Frequenzbereichsintegration an dem Frequenzbereichsbeschleunigungssignal, um ein Frequenzbereichsgeschwindigkeitssignal zu erhalten; und Umwandeln des Frequenzbereichsgeschwindigkeitssignals in das Zeitbereichsgeschwindigkeitssignal durch inverse schnelle Fourier-Transformation.

9. Fehlerdiagnosevorrichtung nach Anspruch 7, **dadurch gekennzeichnet, dass** das Abschneiden einer Vielzahl von Geschwindigkeitssignalsegmenten entlang des Zeitbereichsgeschwindigkeitssignals durch die Ausrichtungs- und Anordnungseinheit (420) unter Verwendung der Rotationsperiode als Schrittgröße Folgendes umfasst: Abschneiden der Vielzahl von Geschwindigkeitssignalsegmenten entlang des Zeitbereichsgeschwindigkeitssignals in einer nicht überlappenden Weise unter Verwendung der Rotationsperiode als Schrittgröße.

10. Fehlerdiagnosevorrichtung nach einem der Ansprüche 7 bis 9, **dadurch gekennzeichnet, dass** das Umwandeln, durch die Umwandlungseinheit (430), der Geschwindigkeitssignalmatrix in ein Bild Folgendes umfasst:
Multiplizieren der Geschwindigkeitssignalmatrix mit einem Normalisierungskoeffizienten, um eine normalisierte Geschwindigkeitssignalmatrix zu erhalten; und
Abbilden der normalisierten Geschwindigkeitssignalmatrix auf das Bild.

11. Fehlerdiagnosevorrichtung nach Anspruch 10, **dadurch gekennzeichnet, dass** das Umwandeln, durch die Umwandlungseinheit (430), der Geschwindigkeitssignalmatrix in ein Bild Folgendes umfasst: Umwandeln der Geschwindigkeitssignalmatrix in ein Farbbild.

12. Fehlerdiagnosevorrichtung nach Anspruch 7, **dadurch gekennzeichnet, dass** nach dem Umwandeln, durch die Umwandlungseinheit (430), der Geschwindigkeitssignalmatrix in ein Bild, der folgende Schritt ferner Folgendes umfasst: Einstellen einer Größe des Bilds auf eine vorbestimmte Größe für das neuronale Netzwerkmodell.

13. Elektronische Vorrichtung, die einen Prozessor, einen Speicher und in dem Speicher gespeicherte Anweisungen umfasst, wobei, wenn die Anweisungen von dem Prozessor ausgeführt werden, das Verfahren nach einem der Ansprüche 1 bis 6 implementiert wird.

14. Computerlesbares Speichermedium, auf dem Computeranweisungen gespeichert sind, wobei beim Ausführen der Computeranweisungen das Verfahren nach einem der Ansprüche 1 bis 6 durchgeführt wird.

## Revendications

1. Procédé de diagnostic de défaut (200) pour un moteur rotatif, le procédé de diagnostic de défaut (200) comprenant :
l'obtention d'un signal d'accélération dans le domaine temporel du moteur rotatif le long d'une direction de vibration et d'une période de rotation (210) du moteur rotatif ;
la conversion du signal d'accélération dans le domaine temporel en signal de vitesse dans le domaine temporel,
la coupure d'une pluralité de segments de signal de vitesse le long du signal de vitesse dans le domaine temporel en prenant la période de rotation comme une taille de pas, et l'agencement de la pluralité de segments de signal de vitesse en séquence pour obtenir une matrice de signal de vitesse (220) ;
la conversion de la matrice de signal de vitesse en une image unique (230) ; et
l'introduction de l'image unique dans un modèle de réseau neuronal entraîné afin d'obtenir un résultat de diagnostic de défaut (240).

2. Procédé de diagnostic de défaut selon la revendication 1, **caractérisé en ce que** la conversion du signal d'accélération dans le domaine temporel en un signal de vitesse dans le domaine temporel comprend :
la conversion du signal d'accélération dans le domaine temporel en un signal d'accélération dans le domaine fréquentiel par transformée de Fourier rapide ;
la réalisation d'intégration dans le domaine fréquentiel du signal d'accélération dans le domaine fréquentiel afin d'obtenir un signal de vitesse dans le domaine fréquentiel ; et la conversion du signal de vitesse dans le domaine fréquentiel en signal de vitesse dans le domaine temporel par une transformée de Fourier rapide inverse.

3. Procédé de diagnostic de défaut selon la revendication 1, **caractérisé en ce que** la coupure d'une pluralité de segments de signal de vitesse le long du signal de vitesse dans le domaine temporel en prenant la période de rotation comme taille de pas comprend : la coupure de la pluralité de segments de signal de vitesse le long du signal de vitesse dans le domaine temporel d'une manière sans chevauchement en prenant la période de rotation comme taille de pas.

4. Procédé de diagnostic de défaut selon l'une quelconque des revendications 1 à 3, **caractérisé en ce que** la conversion de la matrice de signal de vitesse en une image comprend :
la multiplication de la matrice de signal de vitesse par un coefficient de normalisation afin d'obtenir une matrice de signal de vitesse normalisée ; et
le mappage de la matrice de signal de vitesse normalisée sur l'image.

5. Procédé de diagnostic de défaut selon la revendication 4, **caractérisé en ce que** la conversion de la matrice de signal de vitesse en une image (230) comprend : la conversion de la matrice de signal de vitesse en une image couleur.

6. Procédé de diagnostic de défaut selon la revendication 1, **caractérisé en ce qu'**après la conversion de la matrice de signal de vitesse en une image (230), le procédé comprend en outre :
l'ajustement d'une taille de l'image à une taille prédéterminée pour le modèle de réseau neuronal.

7. Appareil de diagnostic de défaut (400) pour un moteur rotatif, l'appareil de diagnostic de défaut (400) comprenant :
une unité d'obtention (410) configurée pour obtenir un signal d'accélération dans le domaine temporel du moteur rotatif le long d'une direction de vibration et d'une période de rotation du moteur rotatif ;
une unité d'alignement et d'agencement (420) configurée pour convertir le signal d'accélération dans le domaine temporel en un signal de vitesse dans le domaine temporel, pour couper une pluralité de segments de signal de vitesse le long du signal de vitesse dans le domaine temporel en prenant la période de rotation comme une taille de pas, et pour agencer la pluralité de segments de signal de vitesse en séquence afin d'obtenir une matrice de signal de vitesse ;
une unité de conversion (430) configurée pour convertir la matrice de signal de vitesse en une image unique ; et
une unité de détermination (440) configurée pour introduire l'image unique dans un modèle de réseau neuronal entraîné afin d'obtenir un résultat de diagnostic de défaut.

8. Appareil de diagnostic de défaut selon la revendication 7, **caractérisé en ce que** la conversion, par l'unité d'obtention (410), du signal d'accélération dans le domaine temporel en un signal de vitesse dans le domaine temporel comprend :
la conversion du signal d'accélération dans le domaine temporel en un signal d'accélération dans le domaine fréquentiel par transformée de Fourier rapide ;
la réalisation d'une intégration dans le domaine fréquentiel sur le signal d'accélération dans le domaine fréquentiel afin d'obtenir un signal de vitesse dans le domaine fréquentiel ; et la conversion du signal de vitesse dans le domaine fréquentiel en signal de vitesse dans le domaine temporel par une transformée de Fourier rapide inverse.

9. Appareil de diagnostic de défaut selon la revendication 7, **caractérisé en ce que** la coupure, par l'unité d'alignement et d'agencement (420), d'une pluralité de segments de signal de vitesse le long du signal de vitesse dans le domaine temporel en prenant la période de rotation comme taille de pas comprend : la coupure de la pluralité de segments de signal de vitesse le long du signal de vitesse dans le domaine temporel d'une manière non chevauchante en prenant la période de rotation comme taille de pas.

10. Appareil de diagnostic de défaut selon l'une quelconque des revendications 7 à 9, **caractérisé en ce que** la conversion, par l'unité de conversion (430), de la matrice de signal de vitesse en une image comprend :
la multiplication de la matrice de signal de vitesse par un coefficient de normalisation afin d'obtenir une matrice de signal de vitesse normalisée ; et
le mappage de la matrice de signal de vitesse normalisée sur l'image.

11. Appareil de diagnostic de défaut selon la revendication 10, **caractérisé en ce que** la conversion, par l'unité de conversion (430), de la matrice de signal de vitesse en une image comprend : la conversion de la matrice de signal de vitesse en une image couleur.

12. Appareil de diagnostic de défaut selon la revendication 7, **caractérisé en ce qu'**après la conversion, par l'unité de conversion (430), de la matrice de signal de vitesse en une image, l'étape suivante est en outre comprise : l'ajustement d'une taille de l'image à une taille prédéterminée pour le modèle de réseau neuronal.

13. Dispositif électronique, comprenant un processeur, une mémoire et des instructions stockées dans la mémoire, lorsque les instructions sont exécutées par le processeur, le procédé selon l'une quelconque des revendications 1 à 6 étant mis en œuvre.

14. Support de stockage lisible par ordinateur, sur lequel sont stockées des instructions informatiques, lorsque les instructions informatiques sont exécutées, le procédé selon l'une quelconque des revendications 1 à 6 étant réalisé.
